# EUROPEAN PATENT SPECIFICATION

(11) **EP 3 251 315 B1**
(45) Date of publication and mention of the grant of the patent: **24.09.2025**
(21) Application number: 15880342.9
(22) Date of filing: 23.12.2015
(51) Int. Cl.: H04L 25/03, H04L 27/00, H04L 27/26, H04L 25/08, H04L 25/06, H04L 5/00

(54) **SYSTEM AND METHODS FOR PRECODED TRANSMISSIONS FOR NARROWBAND TRANSMISSIONS WITHIN WIDER SYSTEM BANDWIDTH**
SYSTEM UND VERFAHREN FÜR VORCODIERTE ÜBERTRAGUNGEN FÜR SCHMALBANDIGE ÜBERTRAGUNGEN INNERHALB EINER GRÖSSEREN SYSTEMBANDBREITE
SYSTÈME ET PROCÉDÉS DE TRANSMISSION PRÉCODÉE POUR DES TRANSMISSIONS À BANDE ÉTROITE DANS UNE LARGEUR DE BANDE DE SYSTÈME PLUS GRANDE

(30) Priority: 29.01.2015 US 201562109342 P
(43) Date of publication of application: 06.12.2017
(73) Proprietor: Apple Inc., Cupertino, CA 95014 (US)
(72) Inventor: HAN, Seunghee, San Jose, CA 95120 (US); CHATTERJEE, Debdeep, Santa Clara, CA 95050 (US)
(74) Representative: Bateman, Samuel Alec
(86) International application number: PCT/US2015/000307
(87) International publication number: WO 2016/122437

(56) References cited:
- WO-A1-2014/049326
- WO-A2-2009/054644
- WO-A2-2009/082127
- GB-A- 2 506 418
- US-A1- 2013 083 749
- US-A1- 2013 114 587
- US-A1- 2013 182 627
- US-A1- 2014 065 979
- ETSI: "LTE; Evolved Universal Terrestrial Radio Access (E-UTRA); Base Station (BS) radio transmission and reception (3GPP TS 36.104 version 8.2.0 Release 8)", 1 November 2008 (2008-11-01), pages 1 - 79, XP055885689, Retrieved from the Internet <URL:https://www.etsi.org/deliver/etsi_ts/136100_136199/136104/08.02.00_60/ts_136104v080200p.pdf> [retrieved on 20220131]

## Description

### PRIORITY CLAIM

This application claims priority to United States Provisional Patent Application Serial No. 62/109,342, filed January 29, 2015.

### TECHNICAL FIELD

Embodiments pertain to wireless communications. Some embodiments relate to cellular communication networks, including networks configured to operate in accordance with the third-generation partnership project (3GPP) long term evolution (LTE) and LTE-advanced (LTE-A) standards. Some embodiments relate to precoded transmissions for narrowband transmissions within a wider system bandwidth.

### BACKGROUND

Machine-type communication (MTC) generally refers to the types of typically automated wireless communications that may be performed by devices such as meters, monitors, and sensors. With respect to many MTC devices, downlink and uplink data exchanges can occur relatively infrequently, and the amounts of communicated data can be relatively small. Due to the nature of typical MTC device communications (e.g., small amount of communicated data, power conservation), narrowband transmissions can be ideal for communicating with MTC devices.
WO 2009/082127 A2 relates to a method for multiplexing one or more multiple access regions.
WO 2009/054644 A2 relates to a signal mapping method and a signal transmission method applying a subcarrier shift method.
GB 2 506 418 A relates to a base station communicating data with at least one terminal in a wireless telecommunications system using a first plurality of OFDM subcarriers spanning a first bandwidth.

### BRIEF DESCRIPTION OF THE DRAWINGS

FIG. 1 is a functional diagram of a 3GPP network, in accordance with some embodiments;
FIG. 2 is a functional diagram of a UE, in accordance with some embodiments;
FIG. 3 is a functional diagram of an eNB, in accordance with some embodiments;
FIG. 4 illustrates an example flowchart of a precoding operation, in accordance with some embodiments;
FIG. 5 illustrates an example of a first UE group having an orthogonal frequency-division multiplexing (OFDM) waveform and a second UE group having a precoded waveform coexisting in a single system bandwidth, in accordance with some embodiments;
FIG. 6 illustrates another example of a first UE group having an OFDM waveform and a second UE group having a precoded waveform coexisting in a single system bandwidth, in accordance with some embodiments;
FIG. 7 illustrates the operation of a method for enabling an eNB to reduce DC interference, in accordance with some embodiments;
FIG. 8 illustrates the operation of a method for enabling a UE to receive a narrowband transmission within a wider system bandwidth, in accordance with some embodiments;
FIG. 9 illustrates an example of a half subcarrier shift, in accordance with some embodiments;
FIG. 10 illustrates another example of subcarrier shift, in accordance with some embodiments; and
FIG. 11 is a block diagram illustrating components of a machine, according to some example embodiments, able to read instructions from a machine-readable medium and perform any one or more of the methodologies discussed herein.

### DETAILED DESCRIPTION

The invention is defined by the appended independent claims. Further embodiments are defined by the appended dependent claims. The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

According to some embodiments, a reduced bandwidth user equipment (UE) for MTC operation can be reduced to 1.4 MHz bandwidth signal in both radio frequency (RF) and baseband. For instance, the reduced bandwidth UE with 1.4MHz can operate within a 20MHz system bandwidth. In some instances, the reduced bandwidth UE can operate within any system bandwidth using different multiplexing techniques. For instance, the different multiplexing techniques can include frequency-division multiplexing (FDM), time-division multiplexing (TDM), code-division multiplexing (CDM), or other multiplexing techniques.

In some instances, a direct-conversion receiver architecture (e.g., zero-intermediate frequency (IF) architecture), which converts RF signals to baseband without an IF stage, can be more cost efficient than a heterodyne receiver architecture, which converts RF signals to baseband using an IF stage. However, the direct-conversion receiver architecture can suffer from direct current (DC) offset, such as DC interference at the center of a desired band.

For example, the direct-conversion (e.g., with zero-IF) transmitters and receivers can introduce significant distortion on the baseband signal components near zero Hz, such as the DC subcarrier of an orthogonal frequency-division multiplexing (OFDM) system.

In a conventional LTE downlink (DL) system, the DC subcarrier can be nulled (e.g., by locking the center frequency to the DC subcarrier) within a system bandwidth in order to reduce the DC offset. However, nulling the DC subcarriers at every narrowband for MTC operation can degrade the system performance and throughput.

Accordingly, techniques described herein can reduce the impact from the DC offset without having to null the DC subcarriers at every narrowband for MTC operations. According to some embodiments, the MTC UE and non-MTC UE can coexist within a given system bandwidth, and the transmissions to the MTC UE can be precoded in order to reduce the DC offset.

According to some embodiments, techniques described herein to reduce the DC offset include: (1) precoding the transmissions sent to the narrowband UE (e.g., MTC UE); (2) having an OFDM system (e.g., non-MTC UE) and a single carrier frequency-division multiple access (SC-FDMA) system (e.g., MTC UE) coexist within a given system bandwidth; and (3) designing systems with backward compatibility for legacy UEs with respect to wideband cell reference signal (CRS) transmissions.

According to some embodiments, techniques described herein can minimizes the impact from DC subcarriers by spreading the interference to all the subcarriers of the narrowband allocation for the MTC UEs, thereby reducing the number of nulled subcarriers, if any, to achieve the same UE demodulation performance as without the spreading operation. Thus, the proposed technique can be seen to help achieve a low complexity MTC UE demodulation performance and system-level resource efficiency.

Additionally, applicability of the techniques described herein can be applied to other narrowband systems, such as narrowband-Internet of Things (NB-IoT). The techniques described herein can also be applied to other narrowband systems to support MTC or Internet of Things (IoT) applications. For example, the techniques herein can be straightforwardly applied to NB-IoT systems design to operate with a minimum system bandwidth of 180 kHz. These NB-IoT systems can be deployed in in-band mode within an existing LTE deployment by assigning at least one physical resource block (PRB)-worth of frequency resources from the wider system bandwidth. Additionally, the NB-IoT systems can be deployed in the guard-band of existing LTE deployments. Furthermore, the NB-IoT systems can also be deployed in stand-alone operation mode (e.g., on re-farmed GSM spectrum). Although the examples in this disclosure are described considering MTC UEs with a maximum supported bandwidth of 1.4 MHz, the ideas herein can be easily applied for MTC or IoT devices with other values of supported bandwidth like 180 kHz or 200 kHz.

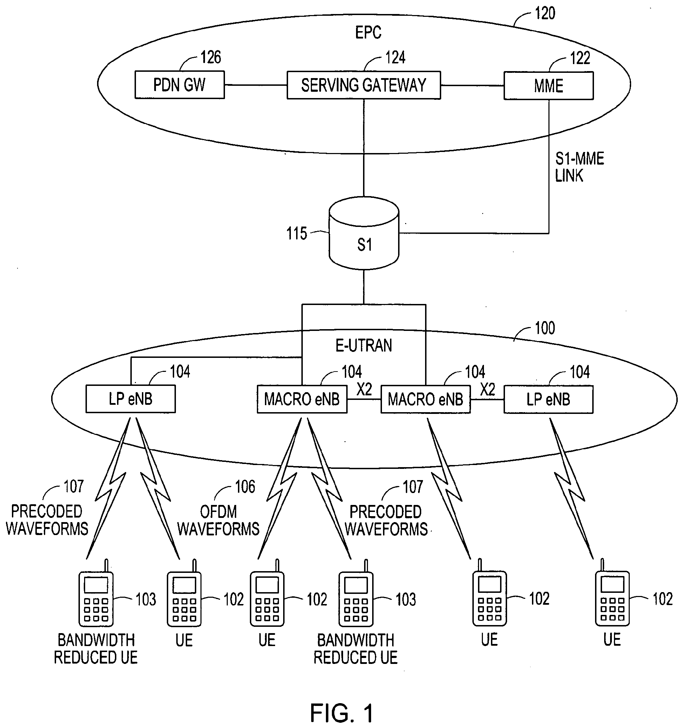

As an overview, FIGS. 1-3 illustrate functional diagrams of an exemplary 3GPP network, a UE, and an eNB, respectively.

FIG. 1 is a functional diagram of a 3GPP network, in accordance with some embodiments. The network comprises a radio access network (RAN) (e.g., as depicted, the E-UTRAN or evolved universal terrestrial radio access network) 100 and a core network 120 (e.g., shown as an EPC) coupled together through an S1 interface 115. For the sake of convenience and brevity, only a portion of the core network 120, as well as the RAN 100, is shown.

The core network 120 includes a mobility management entity (MME) 122, serving gateway (serving GW) 124, and a packet data network gateway (PDN GW) 126. The RAN 100 includes eNBs 104 (which may operate as base stations) for communicating with UEs 102 and reduced bandwidth UEs 103. The eNBs 104 may include macro eNBs and low power (LP) eNBs, such as micro eNBs.

The MME 122 is similar in function to the control plane of legacy Serving GPRS Support Nodes (SGSN). The MME 122 manages mobility aspects of access such as GW selection and tracking area list management. The serving GW 124 terminates the interface toward the RAN 100, and routes data packets between the RAN 100 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates a SGi interface toward the PDN. The PDN GW 126 routes data packets between the core network 120 and the external PDN, and may be a key node for policy enforcement and charging data collection. It may also provide an anchor point for mobility with non-LTE accesses. The external PDN can be any kind of IP network, as well as an IMS domain. The PDN GW 126 and the serving GW 124 may be implemented in one physical node or separate physical nodes.

The eNBs 104 terminate the air interface protocol and may be the first point of contact for a normal UE 102 or a reduced bandwidth UE 103. In some embodiments, an eNB 104 may fulfill various logical functions for the RAN 100 including but not limited to RNC (radio network controller functions) such as radio bearer management, uplink and downlink dynamic radio resource management and data packet scheduling, and mobility management.

In accordance with embodiments, UEs 102 can be configured to communicate OFDM waveforms 106 (e.g., OFDM communication signals) with an eNB 104 over a multicarrier communication channel in accordance with an orthogonal frequency-division multiple access (OFDMA) communication technique. The OFDM waveforms 106 may comprise a plurality of orthogonal subcarriers.

Additionally, in accordance with embodiments, reduced bandwidth UEs 103 can be configured to communication using precoded waveforms 107 with an eNB 104. In some instances, the SC-FDMA waveforms transmitted to the reduced bandwidth UE 103 from the eNB 104 can be precoded. The SC-FDMA waveforms to the reduced bandwidth UE 103 can be precoded using a Discrete Fourier Transform (DFT) spreading technique.

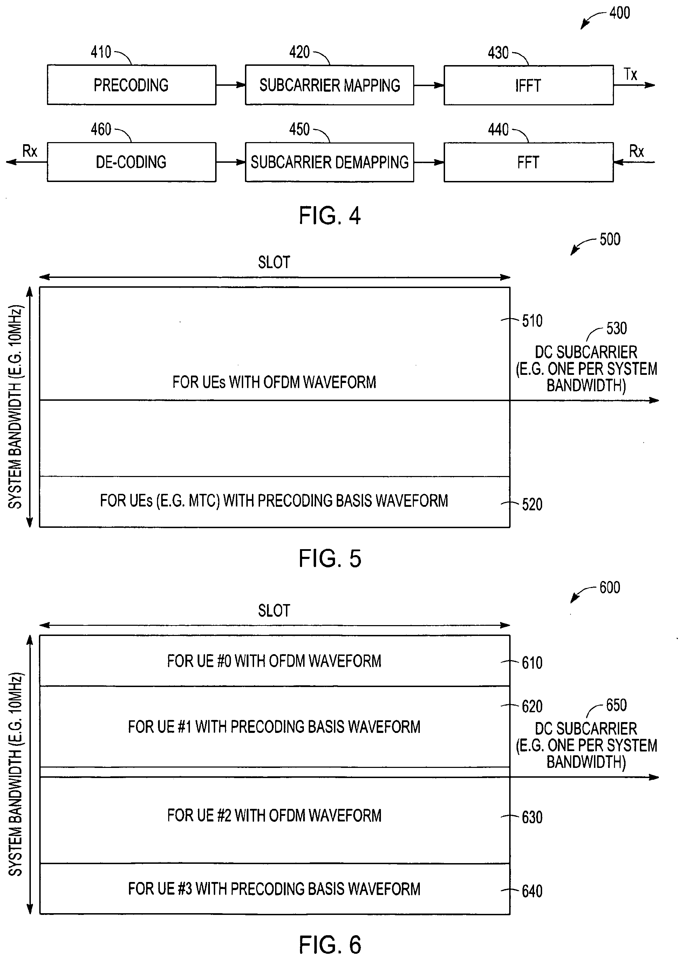

In some instances, the eNB 104 can communication with a reduced bandwidth UE 103 (e.g., MTC device) using the precoded waveforms 107, and the eNB 104 can communicate with a normal UE 102 (e.g., smartphone) using the OFDM waveforms 106. For example, the precoded waveforms 107 and the OFDM waveforms 106 can be combined into a single system bandwidth (e.g., 20 MHz system bandwidth) as later illustrated in FIG. 5 and FIG. 6. A subcarrier mapper at the eNB 104 can combine the different waveforms 106, 107 into the single system bandwidth using a subcarrier mapping technique.

The MTC device is an example of a reduced bandwidth UE 103. As previously discussed, the MTC device can have automated wireless communications that may be performed by devices such as meters, monitors, and sensors. With respect to many MTC devices, downlink and uplink data exchanges can occur relatively infrequently, and the amounts of communicated data can be relatively small.

The S1 interface 115 is the interface that separates the RAN 100 and the core network 120. It is split into two parts: the S1-U, which carries data traffic between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

In cellular networks, low power (LP) cells are typically used to extend coverage to indoor areas where outdoor signals do not reach well, or to add network capacity in areas with dense phone usage, such as train stations. As used herein, the term "LP eNB" refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. In some instances, a home eNB gateway may be inserted between a home eNB (e.g., femtocell eNB) and the MME 122 and serving gateway 124. The home eNB gateway can control several Home eNBs and concentrates the user data and signaling traffic from the home eNBs towards the MME 122 and serving gateway 124. Similarly, a picocell is a wireless communication system typically covering a small area, such as in-building (offices, shopping malls, train stations, etc.), or, more recently, in-aircraft. A picocell eNB can generally connect through the X2 link to another eNB such as a macro eNB through its base station controller (BSC) functionality. Additionally, the picocell eNB is connected via an S1 interface to an MME 122 or serving gateway 124. Thus, an LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

In some embodiments, a downlink resource grid may be used for downlink transmissions from an eNB 104 to a normal UE 102 or a reduced bandwidth UE 103, while uplink transmissions from the normal UE 102 or the reduced bandwidth UE 103 to the eNB 104 may utilize similar techniques. The grid may be a time-frequency grid, called a resource grid or time-frequency resource grid, which is the physical resource in the downlink in each slot. Such a time-frequency plane representation is common for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. There are several different physical downlink channels that are conveyed using such resource blocks. With particular relevance to this disclosure, two of these physical downlink channels are the physical downlink shared channel (PDSCH) and the physical downlink control channel (PDCCH).

The PDSCH carries user data and higher-layer signaling to a normal UE 102. The PDCCH carries information about the transport format and resource allocations related to the PDSCH channel, among other things. It also informs the normal UE 102 about the transport format, resource allocation, and hybrid automatic repeat request (HARQ) information related to the uplink shared channel. Typically, downlink scheduling (assigning control and shared channel resource blocks to UEs 102 within a cell) is performed at the eNB 104 based on channel quality information fed back from the UEs 102 to the eNB 104, and then the downlink resource assignment information is sent to a normal UE 102 on the PDCCH used for (assigned to) the normal UE 102.

The PDCCH uses control channel elements (CCEs) to convey the control information. Before being mapped to resource elements, the PDCCH complex-valued symbols are first organized into quadruplets, which are then permuted using a sub-block inter-leaver for rate matching. Each PDCCH is transmitted using one or more of these CCEs, where each CCE corresponds to nine sets of four physical resource elements known as resource element groups (REGs). Four quadrature phase-shift keying (QPSK) symbols are mapped to each REG. The PDCCH can be transmitted using one or more CCEs, depending on the size of the downlink control information (DCI) and the channel condition. There may be four or more different PDCCH formats defined in LTE with different numbers of CCEs (e.g., aggregation level L=1, 2, 4, or 8).

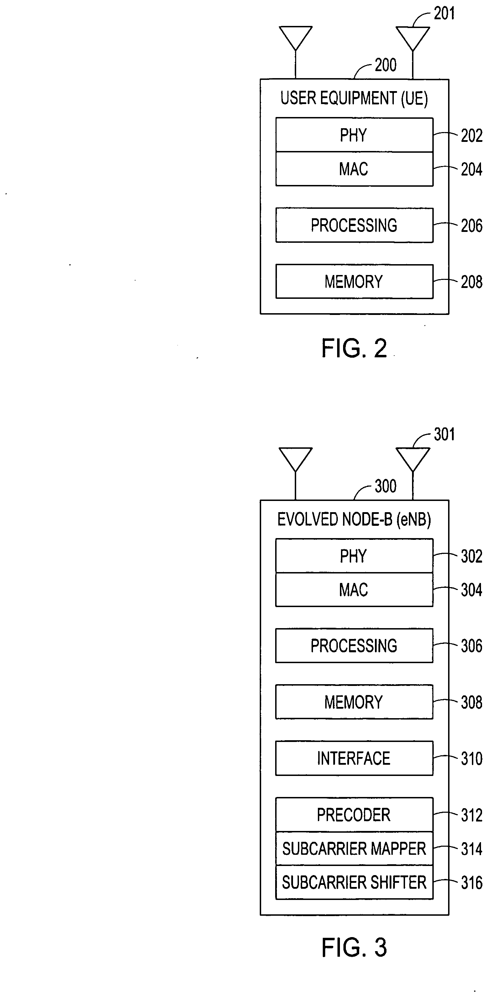

FIG. 2 is a functional diagram of a UE 200, in accordance with some embodiments. FIG. 3 is a functional diagram of an evolved node-B (eNB) 300, in accordance with some embodiments. The UE 200 can be a normal UE 102 (e.g., smartphone) or reduced bandwidth UE 103 (e.g., MTC) as depicted in FIG. 1, while the eNB 300 can be an eNB 104 as depicted in FIG. 1.

The UE 200 can include physical layer circuitry (PHY) 202 for transmitting and receiving signals to and from the eNB 300, other eNBs, other UEs, or other devices using one or more antennas 201, while the eNB 300 can include physical layer circuitry (PHY) 302 for transmitting and receiving signals to and from the UE 200, other eNBs, other UEs, or other devices using one or more antennas 301.

The UE 200 can also include medium access control layer (MAC) circuitry 204 for controlling access to the wireless medium, while the eNB 300 can also include MAC circuitry 304 for controlling access to the wireless medium.

The UE 200 can also include processing circuitry 206 and memory 208 arranged to perform the operations described herein, and the eNB 300 can also include processing circuitry 306 and memory 308 arranged to perform the operations described herein.

The eNB 300 can also include one or more interfaces 310, which can enable communication with other components, including other eNBs 104 (FIG. 1), components in the core network 120 (FIG. 1), or other network components. In addition, the interfaces 310 can enable communication with other components that may not be shown in FIG. 1, including components external to the network. The interfaces 310 may be wired, wireless, or a combination thereof.

The antennas 201, 301 may comprise one or more directional or omnidirectional antennas, including, for example, dipole antennas, monopole antennas, patch antennas, loop antennas, microstrip antennas, or other types of antennas suitable for transmission of radio frequency (RF) signals. In some multiple-input multiple-output (MIMO) embodiments, the antennas 201, 301 may be effectively separated to take advantage of spatial diversity and the different channel characteristics that may result.

The eNB 300 can include a precoder 312, a subcarrier mapper 314, and a subcarrier shifter 316 which interface with other components of the eNB 300 (e.g., antenna 301, PHY 302, and MAC circuitry 304, processing circuitry 306, memory 308, interface 310) to communicate with the UE 200 via a radio interface. Additionally, the precoder 312, the subcarrier mapper 314, and the subcarrier shifter 316 can have processing circuitry and memory and interfaces to communicate with the other components of the eNB 300 via one or more internal interfaces.

In some instances, the precoder 312 can precode waveforms to be transmitted to the reduced bandwidth UE 103. For example, the precoder 312 can use Discrete Fourier Transform DFT techniques for precoding.

In some instances, the subcarrier mapper 314 can use subcarrier mapping techniques to combine the precoded waveforms 107 transmitted to the reduced bandwidth UE 103 and the OFDM waveforms 106 transmitted to the normal UE 102 into a single system bandwidth (e.g., 20 MHz system bandwidth).

In some instances, the subcarrier shifter 316 can perform subcarrier shifting to avoid the narrowband central frequency to coincide with a modulated subcarrier at the transmitter side. The half-subcarrier shifting can be similar to the operation performed during conventional LTE UL.

In some embodiments, mobile devices or other devices described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), an MTC device, or another device including wearable devices that may receive and/or transmit information wirelessly. In some embodiments, the mobile device or other device can be a UE or an eNB configured to operate in accordance with 3GPP standards. In some embodiments, the mobile device or other device may be configured to operate according to other protocols or standards, including IEEE 802.11 or other IEEE standards. In some embodiments, the mobile device or other device may include one or more of a keyboard, a display, a non-volatile memory port, multiple antennas, a graphics processor, an application processor, speakers, and other mobile device elements. The display may be a liquid crystal display (LCD) screen including a touch screen.

Although the UE 200 and the eNB 300 are each illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radiofrequency integrated circuits (RFICs), and combinations of various hardware and logic circuitry for performing at least the functions described herein. In some embodiments, the functional elements may refer to one or more processes operating on one or more processing elements.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors that may be configured with instructions stored on a computer-readable storage device.

In some embodiments, the UE 200, such as a normal UE 102, may be configured to receive OFDM waveforms 106 (e.g., OFDM communication signals) over a multicarrier communication channel in accordance with an OFDMA communication technique. The OFDM signals may comprise a plurality of orthogonal subcarriers. Additionally, the UE, such as the reduced bandwidth UE 103, may be configured to receive precoded waveforms 107, such as the SC-FDMA waveforms.

In some broadband multicarrier embodiments, the eNB 300 may be part of a broadband wireless access (BWA) communication network, such as a Worldwide Interoperability for Microwave Access (WiMAX) communication network, a 3GPP Universal Terrestrial Radio Access Network (UTRAN) LTE network, or a LTE communication network, although the scope of this disclosure is not limited in this respect. In these broadband multicarrier embodiments, the UE 200 and the eNB 300 may be configured to communicate in accordance with an OFDMA technique.

With regards to the DC offset problem, when a reduced bandwidth UE 103 applies a conventional DL OFDM subcarrier mapping, then the DC subcarrier for the reduced bandwidth UE 103 can coincide with a modulated subcarrier. The conventional DL OFDM subcarrier mapping (i.e. no change in the method for current subcarrier mapping) can be similar to the techniques described in 3GPP specification: TS 36.211, Section 6.12. The conventional DL OFDM subcarrier mapping can lead to a performance degradation that can be greater than 0.5 dB (assuming QPSK modulation is used). The degradation can be greater for higher order modulations than QPSK.

### Precoding Operation

According to some embodiments, a precoding operation can be performed by precoder 312 before or after the waveform designated for the reduced bandwidth UE 103 is mapped in subcarriers in frequency domain. The precoding operation can generate the precoded waveform 107 described in FIG. 1. In a further example, the precoding operation can be DFT spreading. For example, the DFT spreading can be similar to the transform precoding step defined for SC-FDMA waveform that has been defined in the LTE uplink (UL). The precoding operation can help to spread out the DC interference.

The precoding operation can allow the reduced bandwidth UE 103 to coexist with the normal UE 102 within a single system bandwidth. For example, the normal UE 102 with OFDM can have a DC subcarrier as the carrier frequency within a given system bandwidth. The reduced bandwidth UE 103 can have a common DC subcarrier that is shared by the normal UE 102 in a given system bandwidth, but an actual carrier frequency for the reduced bandwidth UE 103 would be the center frequency of the assigned frequency without an individual DC subcarrier in the assigned frequency.

In some instances, the precoding operation can be specific to the channels transmitted to the reduced bandwidth UEs 103 operating within a narrower bandwidth (e.g., 1.4 MHz, 6 physical resource blocks (PRBs)) compared to the system bandwidth. Thus, the precoding operation can be applied without any impact to legacy UEs for all channels and reference signal (RS), except for cell-specific reference signals (CRS) that are transmitted in a wideband fashion over the entire system bandwidth.

Further, a half-subcarrier shifting can be applied to further avoid the narrowband central frequency to coincide with a modulated subcarrier at the transmitter side. The half-subcarrier shifting can be similar to the operation performed during conventional LTE UL. For example, the subcarrier shifter 316 can also perform the half-subcarrier shifting to the DL signal.

In some instances, in order to accommodate the half-subcarrier shift in addition to the precoding application, the subcarrier shifter 316 can include a guard band between the set of contiguous PRBs with precoding application and the set of contiguous PRBs without precoding application. For example, the guard band can have a width of at least a half-subcarrier spacing.

FIG. 4 illustrates an example flowchart 400 of a precoding operation during transmission of a waveform, in accordance with some embodiments.

At operation 410, the precoder 312 can perform a precoding operation. FIG. 4 illustrates a precoding operation to a waveform designated for a reduced bandwidth UE 103. For example, when precoding is based on DFT spreading, the precoding operation can be similar to SC-FDMA as in LTE UL. At operation 420, the subcarrier mapper 314 can perform a subcarrier mapping operation to the precoded waveform from operation 410. In some instances, the subcarrier mapping can be performed before the precoding. At operation 430, the eNB 300 can perform an inverse fast Fourier transform (IFFT) and transmit the signal to the reduced bandwidth UE 103.

At operation 440, the reduced bandwidth UE 103 can receive the transmitted signal from operation 430, and perform a fast Fourier transform (FFT). Additionally, the reduced bandwidth UE 103 can perform a subcarrier demapping at operation 450, and a de-precoding at operation 460.

### Coexistence of the Precoded Waveform and the OFDM Waveform in a Single System Bandwidth

Techniques for coexistence between OFDM waveforms and SC-FDMA waveforms are disclosed herein. In some instances, the SC-FDMA waveform can also be referred as a DFT-spread-OFDM (DFT-S-OFDM) waveform. DFT-S-OFDM is a SC-like transmission scheme that can be combined with OFDM with flexibility.

Depending on the use cases in the DL, the eNB 104 can transmit OFDM or SC-FDMA waveform to a UE (e.g., normal UE 102, reduced bandwidth UE 103). For example, the use case can be based on the UE application (i.e. MTC application or non-MTC application), or can be based on the UE category or type.

The different waveforms (e.g., OFDM, SC-FDMA) can coexist with the given system bandwidth for the different UEs. Additionally, this technique can be further extended to UL transmission for the different UEs. The granularity of assigning the different waveforms can be based on the PRB allocation considering the backward compatibility of current DL OFDM waveform.

FIG. 5 illustrates an example of a first UE group having an OFDM waveform and a second UE group having a precoded waveform coexisting in a system bandwidth, in accordance with some embodiments. The system bandwidth 500 has a DC subcarrier 530. In some instances, there is only one DC subcarrier 530 per system bandwidth 500.

For example, a first UE group (i.e., one or more UEs) can be configured (e.g., scheduled) to receive DL transmissions from an eNB using the first region 510 based on a first criteria, and a second UE group can be configured (e.g., scheduled) to receive DL transmissions from an eNB using the second region 520 based on a second criteria. The criteria can be based on an application type, a UE type, a UE category, and so on. As illustrated in FIG. 5, the criteria can be based on the UE type, where the normal UEs 102 (e.g., UEs with OFDM waveform) use the first region 510 to communicate with the eNB 104, and the reduced bandwidth UEs 103 (e.g., MTC with precoding basis waveform) use the second region 520 to communicate with the eNB 104. Additionally, in some instances, the DC subcarrier 530 is within the first region 510, which is used to communicate with the normal UE 103.

FIG. 6 illustrates another example of a first UE group having an OFDM waveform and a second UE group having a precoded waveform coexisting in a single system bandwidth, in accordance with some embodiments. The system bandwidth 600 includes a DC subcarrier 650. In some instances, there is only one DC subcarrier 650 per system bandwidth 600.

In this example, a first UE and a third UE, both having the same criteria, can be configured to receive DL transmissions from an eNB using the first region 610 and the third region 630. As previously mentioned, the criteria can be based on an application type, a UE type, a UE category, and so on. Additionally, a second UE and a fourth UE, both having a different criteria, can be scheduled to communicate with the eNB using the second region 620 and the fourth region 640.

In the example illustrated in FIG. 6, the eNB 104 allocates the system bandwidth 600 based on UE type (e.g., normal UE 102 and reduced bandwidth UE 103). Therefore, the first UE and the third UE are normal UEs 102 with OFDM waveforms. Thus the first UE and the third UE are configured to receive DL transmissions from the eNB 104 using the first region 610 and the third region 630, respectively. Furthermore, the second UE and the fourth UE are reduced bandwidth UEs 103 with precoding basis waveform. Thus the second UE and the fourth UE are configured to receive DL transmissions from the eNB 104 using the second region 620 and the fourth region 640, respectively.

### Minimizing the Impact to legacy UEs

According to some embodiments, techniques described herein can minimize the impact of the precoding operation on legacy UEs. In some instances, the precoded waveform and the OFDM waveform in a single system bandwidth may impact legacy UEs. For example, legacy UEs may be affected due to the application of the precoding within the PRBs of the narrowband MTC region (e.g., the second region 520 in FIG. 5, the second region 620 and the fourth region 640 in FIG. 6).

Specifically, if legacy UEs and non-legacy UEs (e.g., Rel-13 LC MTC UEs and above) are multiplexed in frequency, the CRS transmissions falling within the narrowband MTC region can be transmitted with the precoding operation while, for the remaining PRBs of the system bandwidth, the CRS can be transmitted without the precoding operation. As a result, this can impact the wideband channel or interference estimation performance on CRS for legacy UEs.

According to some embodiments, in order to minimize the impact to legacy UEs, the eNB 104 can configure transmission to the MTC UEs only in multicast-broadcast single-frequency network (MBSFN) subframes. The MBSFN is a communication channel defined in the LTE standards. In some instances, for MBSFN subframes, wideband CRS can be transmitted by the eNB 104 within the legacy DL control region (i.e., 1 or 2 symbols of the first slot of an MBSFN subframe). Therefore, the remaining symbols can be used for transmissions to the reduced bandwidth UEs 103. Additionally, in some instances, a reduced bandwidth UE 103 may not be able to receive legacy DL control channels, and consequently, the starting symbol wherein a reduced bandwidth UE 103 can expect control or data transmission can be predefined or configured in order to exclude the legacy DL control region. For example, the starting symbol can be predefined or configured by the eNB 104. Accordingly, in some instances, the precoding for the reduced bandwidth UEs 103 can be applied within the PRBs of the narrowband region without impacting legacy UEs.

According to some embodiments, the impact to the legacy UEs can also be realized via configuration of cell ON/OFF mechanism. For example, as defined in Rel-12 LTE-A specification, when a cell is configured as OFF, then the CRS is not transmitted.

According to some embodiments, the impact to legacy UEs can be reduced using either a rate-match technique or a puncture technique around the legacy CRS symbols for the precoded transmissions to the reduced bandwidth UEs 103. The rate-match technique or a puncture technique can reduce the impact to legacy UEs, but there may be some throughput degradation for the reduced bandwidth UEs 103.

For example, the rate-matching technique around the CRS can be performed using an example mapping such as: {0, 1, CRS, 2, 3, ...}. Additionally, the puncturing technique around the CRS can be performed using an example mapping such as: {0, 1, CRS, 3, 4,...}.

According to some other embodiments, the MTC OFDM symbol can be overlapped with the CRS OFDM symbol. The overlap can be done using rate-matching or puncturing techniques around the legacy CRS resource elements (Res) after precoding (e.g., DFT spreading) for the reduced bandwidth UEs 103. In some instances, the eNB 104 can adjust the DFT size based on the number of CRS REs on the assigned resource blocks (RBs) for the reduced bandwidth UEs 103.

In a rate-matching example, when the number of RBs for the reduced bandwidth UEs 103 is two (i.e., 24 REs) and if the number of CRS REs in the two RBs is four, then the DFT size can be 24. Continuing with the first example, the DFT size can be reduced by the number of REs allocated for the CRS. Therefore, the DFT size can be adjusted to 20 (i.e., based on 20 = 24 total REs - four REs allocated for the CRS). Therefore, the 20 elements after DFT precoding can be mapped to the available 20 REs, and the remaining four REs can be allocated for the CRS.

In a puncturing example, when the number of RBs for the reduced bandwidth UEs 103 is two (i.e., 24 REs) and if the number of REs allocated for the CRS in the two RBs is 4, then the DFT size can be 24. Then the 24 REs after DFT precoding can be mapped to the two PRBs, and then the corresponding REs to CRS REs are punctured around CRS REs, thus 20 REs are effectively mapped.

### Techniques for Reducing DC interference

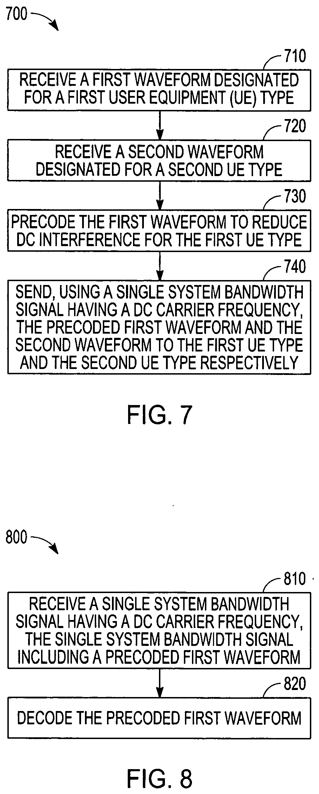

FIG. 7 illustrates the operation of a method 700 for reducing DC interference, in accordance with some embodiments. Method 700 can be performed by an eNB 104 (e.g., eNB 300). Embodiments are not limited to these configurations, however, and some or all of the techniques and operations described herein may be applied to any systems or networks.

It is important to note that embodiments of the method 700 may include additional or even fewer operations or processes in comparison to what is illustrated in FIG. 7. In addition, embodiments of the method 700 are not necessarily limited to the chronological order that is shown in FIG. 7. In describing the method 700, reference may be made to FIGS. 1-6, although it is understood that the method 700 may be practiced with any other suitable systems, interfaces, and components.

In addition, while the method 700 and other methods described herein may refer to eNBs 104 or UEs 102 operating in accordance with 3GPP or other standards, embodiments of those methods are not limited to just those eNBs 104, reduced bandwidth UEs 103, or UEs 102, and may also be practiced by other mobile devices, such as a Wi-Fi access point (AP) or user station (STA). Moreover, the method 700 and other methods described herein may be practiced by wireless devices configured to operate in other suitable types of wireless communication systems, including systems configured to operate according to various IEEE standards such as IEEE 802.11.

At operation 710 of the method 700, an apparatus of the eNB 300, using transceiver circuitry, can receive (e.g., access, obtain) a first waveform designated for a first User Equipment (UE) type. In some instances, the transceiver circuitry can be the physical layer circuitry 302 of the eNB 300 in FIG. 3. In some instances, the first waveform is received from a baseband processor.

In some instances, the first UE type can be the reduced bandwidth UE 103. For example, the reduced bandwidth UE 103 can receive a 1.4 MHz bandwidth signal. Additionally, the reduced bandwidth UE 103 can be a Machine-Type Communications (MTC) device.

At operation 720, the eNB 300, using the transceiver circuitry, can receive (e.g., access, obtain) a second waveform designated for a second UE type. As previously mentioned, the transceiver circuitry can be the physical layer circuitry 302 of the eNB 300 in FIG. 3. In some instances, the second waveform is received from a baseband processor.

In some instances, for both operations 710 and 720, the received first and second waveform can occur all within the eNB and is not received from the UE.

In some instances, the second UE type is a non-reduced bandwidth UE that receives up to a 20 MHz bandwidth signal. For example, the second UE can be the normal UE 102.

In some instances, the first UE type and the second UE type coexist in a same system bandwidth associated with the single system bandwidth signal.

In some instances, only one DC subcarrier exists within a given system bandwidth.

At operation 730, the eNB 300, using processing circuitry, can precode the first waveform to reduce DC interference for the first UE type. In some instances, the processing circuitry can be the processing circuitry 306 of the eNB 300 in FIG. 3. In some other instances, the precoder 312 of the eNB 300 can perform operation 730.

In some instances, after operation 730, the first waveform is precoded before the first waveform is mapped to a subcarrier frequency. For example, the eNB 300, using the subcarrier mapper 314, can perform a subcarrier mapping operation to the precoded waveform, as illustrated in operation 420 of FIG. 4.

Alternatively, before operation 730, the first waveform is precoded after the first waveform is mapped to a subcarrier frequency. For example, the eNB 300, using the subcarrier mapper 314, can perform a subcarrier mapping operation to the first waveform received at operation 710.

In some instances, the processing circuitry in method 700 can be further configured to shift the precoded first waveform by a predetermined amount (e.g., half of a subcarrier frequency). For example, the eNB 300, using the subcarrier shifter 316, can shift the precoded waveform by a half of a subcarrier frequency. The shift operation performed by the subcarrier shifter 316 can be performed after the precoding operation, or after the subcarrier mapping operation.

Additionally, the processing circuitry in method 700 can be further configured to provision a guard band between the precoded first waveform and the second waveform. For example, the guard band can have a width of at least half of a subcarrier frequency.

At operation 740, the eNB 300, using the transceiver circuitry, can send, using a single system bandwidth signal having a DC carrier frequency. The precoded first waveform is sent to the first UE type and the second waveform is sent to the second UE type. In some instances, the first waveform is precoded using a Discrete Fourier Transform (DFT) spreading technique, and the second waveform is an orthogonal frequency-division multiplexing (OFDM) waveform. As previously mentioned, the transceiver circuitry can be the physical layer circuitry 302 of the eNB 300 in FIG. 3.

In some instances, the precoded first waveform can be transmitted using a limited multicast-broadcast single-frequency network (MBSFN) region of the MBSFN subframes. For example, the limited MBSFN region can exclude the first symbol or the second symbol of the MBSFN subframes.

In some instances, the precoded first waveform can be transmitted by rate-matching around orthogonal frequency-division multiplexing (OFDM) symbols, the OFDM symbols carrying legacy cell-specific reference signals (CRS).

In some instances, the precoded first waveform can be transmitted by puncturing around orthogonal frequency-division multiplexing (OFDM) symbols, the OFDM symbols carrying legacy CRS.

FIG. 8 illustrates the operation of a method 800 for enabling a UE to receive a narrowband transmission within a wider system bandwidth, in accordance with some embodiments. Method 800 can be performed by a UE (e.g., reduced bandwidth UE 103, UE 200). It is important to note that embodiments of the method 800 may include additional or even fewer operations or processes in comparison to what is illustrated in FIG. 8. In addition, embodiments of the method 800 are not necessarily limited to the chronological order that is shown in FIG. 8. In describing the method 800, reference may be made to FIGS. 1-7, although it is understood that the method 800 may be practiced with any other suitable systems, interfaces, and components.

In addition, while the method 800 and other methods described herein may refer to reduced bandwidth UEs 103 and eNBs 104 operating in accordance with 3GPP or other standards, embodiments of those methods are not limited to just those reduced bandwidth UEs 103 and eNBs 104 and may also be practiced by other mobile devices, such as UEs 102, a Wi-Fi AP, or STA. Moreover, the method 800 and other methods described herein may be practiced by wireless devices configured to operate in other suitable types of wireless communication systems, including systems configured to operate according to various IEEE standards such as IEEE 802.11.

At operation 810, the apparatus of a reduced bandwidth UE 103, using transceiver circuitry, can receive a single system bandwidth signal having a DC carrier frequency, the single system bandwidth signal including a precoded first waveform. The transceiver circuitry of the reduced bandwidth UE 103 for performing operation 810 can be similar to the physical layer circuitry 202 in FIG. 2.

At operation 820, the reduced bandwidth UE 103, using processing circuitry, can decode the precoded first waveform. The processing circuitry of the reduced bandwidth UE 103 for performing operation 820 can be similar to the processing circuitry 206 in FIG. 2.

In some instances, the processing circuitry 206 can be further configured to perform a subcarrier demapping operation. The subcarrier demapping operation can be performed before or after the decoding at operation 820.

In some instances, the processing circuitry 206 can be further configured to perform a subcarrier shift operation. For example, when method 700 includes a subcarrier shift (e.g., performed by the subcarrier shifter 316) before the eNB 104 transmits the signal to the reduced bandwidth UE 103, the reduced bandwidth UE 103 in method 800 can also perform a subcarrier shift of the received signal. The shift at the reduced bandwidth UE 103 can be performed by the processing circuitry 206 of UE 200.

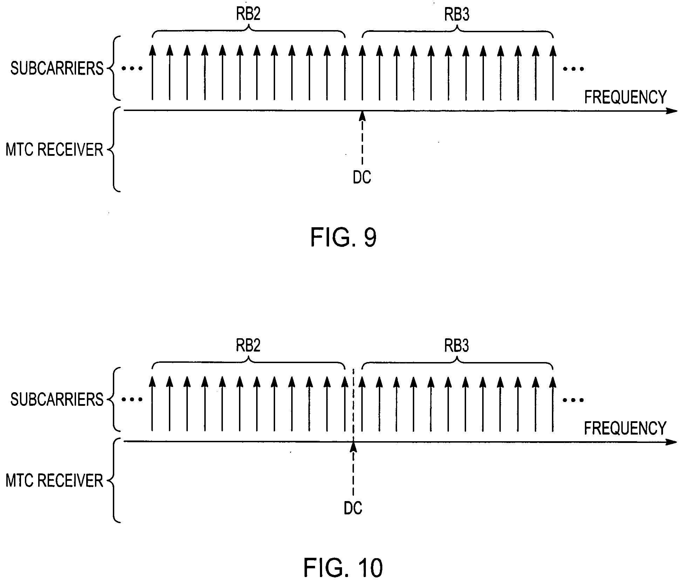

FIG. 9 illustrates an example of a half subcarrier shift at the reduced bandwidth UE 103 when the shifted DC subcarrier is not aligned with a subcarrier in a RB, in accordance with some embodiments. For example, the shift of the received signal can be performed by the processing circuitry 206 of UE 200.

FIG. 10 illustrates an example of a subcarrier shift at the reduced bandwidth UE 103 when the shifted DC subcarrier is not aligned with any existing subcarrier, in accordance with some embodiments. For example, the shift of the received signal can be performed by the processing circuitry 206 of UE 200.

### Computer Hardware

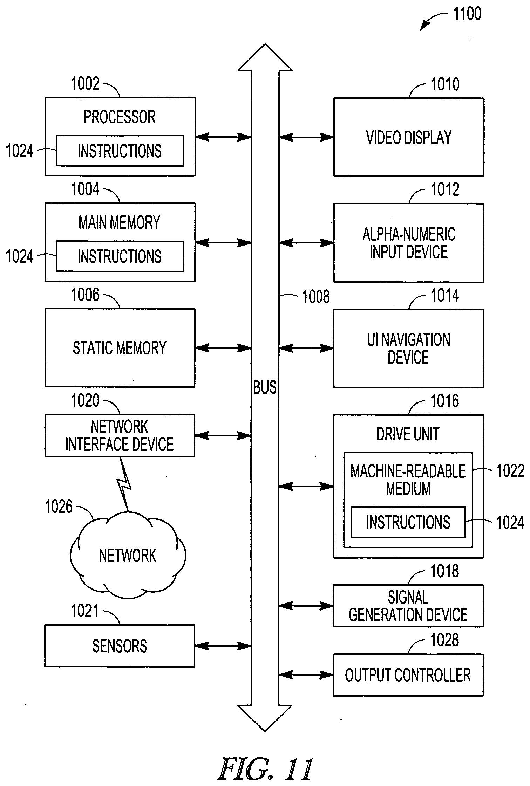

FIG. 11 illustrates a block diagram of an example machine 1100 upon which any one or more of the techniques (e.g., methodologies) discussed herein may perform. In alternative embodiments, the machine 1100 may operate as a standalone device or may be connected (e.g., networked) to other machines. In a networked deployment, the machine 1100 may operate in the capacity of a server machine, a client machine, or both in server-client network environments. In an example, the machine 1100 may act as a peer machine in peer-to-peer (P2P) (or other distributed) network environment. The machine 1100 may be a UE (e.g., UE 200), the precoder 312, the subcarrier mapper 314, the subcarrier shifter 316, an eNB (e.g., eNB 300), personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine 1100 is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 1100 may include a hardware processor 1102 (e.g., a central processing unit (CPU), a graphics processing unit (GPU), a hardware processor core, or any combination thereof), a main memory 1104 and a static memory 1106, some or all of which may communicate with each other via an interlink (e.g., bus) 1108. The machine 1100 may further include a video display unit 1110, an alphanumeric input device 1112 (e.g., a keyboard), and a user interface (UI) navigation device 1114 (e.g., a mouse). In an example, the display unit 1110, input device 1112 and UI navigation device 1114 may be a touch screen display. The machine 1100 may additionally include a storage device (e.g., drive unit) 1116, a signal generation device 1118 (e.g., a speaker), a network interface device 1120, and one or more sensors 1121, such as a global positioning system (GPS) sensor, compass, accelerometer, or other sensor. The machine 1100 may include an output controller 1128, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 1116 may include a machine-readable medium 1122 on which is stored one or more sets of data structures or instructions 1124 (e.g., software) embodying or utilized by any one or more of the techniques or functions described herein. The instructions 1124 may also reside, completely or at least partially, within the main memory 1104, within static memory 1106, or within the hardware processor 1102 during execution thereof by the machine 1100. In an example, one or any combination of the hardware processor 1102, the main memory 1104, the static memory 1106, or the storage device 1116 may constitute machine-readable media.

While the machine-readable medium 1122 is illustrated as a single medium, the term "machine readable medium" may include a single medium or multiple media (e.g., a centralized or distributed database, and/or associated caches and servers) configured to store the one or more instructions 1124.

The term "machine readable medium" may include any medium that is capable of storing, encoding, or carrying instructions (e.g., instructions 1124) for execution by the machine 1100 and that cause the machine 1100 to perform any one or more of the techniques of the present disclosure, or that is capable of storing, encoding or carrying data structures used by or associated with such instructions. Non-limiting machine-readable medium examples may include solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 1124 may further be transmitted or received over a communications network 1126 using a transmission medium via the network interface device 1120 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 1120 may include one or more physical jacks (e.g., Ethernet, coaxial, or phone jacks) or one or more antennas to connect to the communications network 1126. In an example, the network interface device 1120 may include a plurality of antennas to wirelessly communicate using at least one of single-input multiple-output (SIMO), multiple-input multiple-output (MIMO), or multiple-input single-output (MISO) techniques. In some examples, the network interface device 1120 may wirelessly communicate using Multiple User MIMO techniques. The term "transmission medium" shall be taken to include any intangible medium that is capable of storing, encoding or carrying instructions for execution by the machine 1100, and includes digital or analog communications signals or other intangible medium to facilitate communication of such software.

### EXAMPLES

Example 1 is an apparatus of an Evolved Node B (eNB) for reducing direct current (DC) interference, the apparatus comprising: transceiver circuitry to: receive a first waveform designated for a first User Equipment (UE) type; and receive a second waveform designated for a second UE type. Additionally, the eNB can include a processing circuitry to: precode the first waveform to reduce DC interference for the first UE type. Subsequently, the transceiver circuitry can be further configured to send, using a single system bandwidth signal having a DC carrier frequency, the precoded first waveform to the first UE type and the second waveform to the second UE type.

Example 2 includes the apparatus of Example 1, wherein the first waveform is precoded using a Discrete Fourier Transform (DFT) spreading technique, and wherein the second waveform is an orthogonal frequency-division multiplexing (OFDM) waveform.

Example 3 includes the apparatus of the above examples, wherein the first UE type is a reduced bandwidth UE that receives a 1.4 MHz bandwidth signal.

Example 4 includes the apparatus of the above examples, wherein the reduced bandwidth UE is a Machine-Type Communications (MTC) device.

Example 5 includes the apparatus of the above examples, wherein the second UE type is a non-reduced bandwidth UE that receives up to a 20 MHz bandwidth signal.

Example 6 includes the apparatus of the above examples, wherein the first waveform is precoded before the first waveform is mapped to a subcarrier frequency.

Example 7 includes the apparatus of Examples 1-5, wherein the first waveform is precoded after the first waveform is mapped to a subcarrier frequency.

Example 8 includes the apparatus of the above examples, wherein the processing circuitry is further configured to shift the precoded first waveform by a half of a subcarrier frequency.

Example 9 includes the apparatus of Example 8, wherein the processing circuitry is further configured to provision a guard band between the precoded first waveform and the second waveform.

Example 10 includes the apparatus of Example 9, wherein the guard band has a width of at least half of a subcarrier frequency.

Example 11 includes the apparatus of the above examples, wherein the precoded first waveform is transmitted using a limited multicast-broadcast single-frequency network (MBSFN) region of the MBSFN subframes.

Example 12 includes the apparatus of the Example 11, wherein the limited MBSFN region excludes a first symbol and a second symbol of the MBSFN subframes.

Example 13 includes the apparatus of the above examples, wherein the precoded first waveform is transmitted by rate-matching around orthogonal frequency-division multiplexing (OFDM) symbols, the OFDM symbols carrying legacy cell-specific reference signals (CRS).

Example 14 includes the apparatus of the Examples 1-12, wherein the precoded first waveform is transmitted by puncturing around orthogonal frequency-division multiplexing (OFDM) symbols, the OFDM symbols carrying legacy cell-specific reference signals (CRS).

Example 15 includes the apparatus of the above examples, wherein the first UE type and the second UE type coexist in a same system bandwidth associated with the single system bandwidth signal.

Example 16 includes the apparatus of the above examples, wherein only one DC subcarrier exists within the single system bandwidth.

Example 17 includes the apparatus of the above examples, wherein the first and second waveforms are received from a baseband processor.

Example 18 is a computer-readable storage medium that stores instructions for execution by one or more processors to perform operations for any of the Examples 1-17.

Example 19 is a non-transitory computer-readable storage medium that stores instructions for execution by one or more processors to perform operations for any of the Examples 1-17.

Example 20 is an apparatus of a UE comprising transceiver circuitry to receive a single system bandwidth signal having a DC carrier frequency, the single system bandwidth signal including a precoded first waveform; and processing circuitry to decode the precoded first waveform.

Example 21 includes the apparatus of Example 20, wherein the precoded first waveform is decoded before a subcarrier demapping operation.

Example 22 includes the apparatus of Example 20, wherein the precoded first waveform is decoded after a subcarrier demapping operation.

Example 23 includes the apparatus of examples 20-22, wherein the MTC coexist with a normal UE in a same system bandwidth associated with the single system bandwidth signal.

Example 24 includes the apparatus of examples 20-23, wherein only one DC subcarrier exists within the single system bandwidth signal.

Example 25 is an eNB of any of Examples 1-17.

Example 26 is the network entity of any of Examples 1-17.

Example 27 may include any of the methods of communicating in a wireless network as shown and described herein.

Example 28 may include any of the systems for providing wireless communication as shown and described herein.

Example 29 may include any of the devices for providing wireless communication as shown and described herein.

The foregoing description of one or more implementations provide illustration and description, but is not intended to be exhaustive or to limit the scope of the embodiments disclosed herein to the precise form disclosed. Modifications and variations are possible in light of the above teachings or may be acquired from practice of various implementations of the embodiments disclosed herein.

### Language

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Although an overview of the inventive subject matter has been described with reference to specific example embodiments, various modifications and changes may be made to these embodiments without departing from the broader scope of embodiments of the present disclosure. Such embodiments of the inventive subject matter may be referred to herein, individually or collectively, by the term "invention" merely for convenience and without intending to voluntarily limit the scope of this application to any single disclosure or inventive concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present disclosure as represented by the appended claims. The specification and drawings are, accordingly, to be regarded in an illustrative rather than a restrictive sense.

## Claims

1. A method for reducing direct current, DC, interference, the method comprising:
at a base station (300):
precoding (730), using processing circuitry, a first waveform that is designated for a first User Equipment, UE (200) type to reduce DC interference for the first UE type, wherein the first UE type comprises reduced bandwidth machine type communication, MTC, UEs configured for a 1.4 MHz bandwidth signal, and wherein the first waveform is mapped to a subcarrier frequency; and
transmitting (740), via transceiver circuitry, using a single system bandwidth signal having a DC subcarrier as a carrier frequency within the single system bandwidth, the precoded first waveform to the first UE type and a second waveform that is designated for a second User Equipment, UE (200) type to the second UE type, wherein:
the second UE type comprises non-reduced bandwidth UEs configured to receive up to a 20 MHz bandwidth signal;
the single system bandwidth is 20MHz; and
only one DC subcarrier exists within the single system bandwidth.

2. The method of claim 1, wherein the first waveform is precoded using a Discrete Fourier Transform, DFT, spreading technique, and wherein the second waveform is an orthogonal frequency-division multiplexing, OFDM, waveform.

3. The method of claims 1-2, wherein the first waveform is precoded before the first waveform is mapped to a subcarrier frequency.

4. The method of claims 1-2, wherein the first waveform is precoded after the first waveform is mapped to a subcarrier frequency.

5. The method of claims 1-4, wherein the base station (300) is further configured to shift the precoded first waveform by a half of a subcarrier frequency.

6. The method of claim 5, wherein the base station (300) is further configured to provision a guard band between the precoded first waveform and the second waveform.

7. The method of claims 1-6, wherein the precoded first waveform is transmitted using a limited multicast-broadcast single-frequency network, MBSFN, region of MBSFN subframes.

8. A machine-readable storage including machine-readable instructions, for execution by one or more processors of an Evolved Node B, eNB (300), that when executed, cause the eNB (300) to implement the method of any of the preceding claims, wherein the one or more processors are operably coupled to transceiver circuitry of the eNB (300).

9. An apparatus of an Evolved Node B, eNB (300), for reducing direct current, DC interference, the apparatus comprising processing circuitry and transceiver circuitry configured to implement the method of any of the claims 1-7.

## Patentansprüche

1. Verfahren zum Reduzieren von Gleichstorm, DC, Interferenz, das Verfahren umfassend: an einer Basisstation (300): Vorcodieren (730), unter Verwendung einer Verarbeitungsschaltung, einer ersten Wellenform, die für einen ersten Benutzergerät, UE, Typ (200) designiert ist, um DC-Interferenz für den ersten UE-Typ zu reduzieren, wobei der erste UE-Typ Maschinentyp-Kommunikation, MTC, UEs mit reduzierter Bandbreite umfasst, die für ein 1,4 MHz-Bandbreitensignal konfiguriert sind, und wobei die erste Wellenform auf eine Unterträgerfrequenz abgebildet wird; und Übertragen (740), über eine Transceiver-Schaltung, unter Verwendung eines einzelnen Systembandbreitensignals mit einem DC-Unterträger als eine Trägerfrequenz innerhalb der einzelnen Systembandbreite, der vorcodierten ersten Wellenform an den ersten UE-Typ und einer zweiten Wellenform, die für einen zweiten Benutzergerät, UE, Typ (200) designiert ist, an den zweiten UE-Typ, wobei: der zweite UE-Typ UEs mit nicht reduzierter Bandbreite umfasst, die konfiguriert sind, um bis zu einem 20 MHz-Bandbreitensignal zu empfangen; die einzelne Systembandbreite 20 MHz beträgt; und nur ein DC-Unterträger innerhalb der einzelnen Systembandbreite vorhanden ist.

2. Verfahren nach Anspruch 1, wobei die erste Wellenform unter Verwendung einer diskreten Fourier-Transformations-, DFT, Spreiztechnik vorcodiert wird, und wobei die zweite Wellenform eine orthogonale Frequenzmultiplex-, OFDM, Wellenform ist.

3. Verfahren nach Anspruch 1-2, wobei die erste Wellenform vorcodiert wird, bevor die erste Wellenform auf eine Unterträgerfrequenz abgebildet wird.

4. Verfahren nach Anspruch 1-2, wobei die erste Wellenform vorcodiert wird, nachdem die erste Wellenform auf eine Unterträgerfrequenz abgebildet wird.

5. Verfahren nach Anspruch 1-4, wobei die Basisstation (300) ferner konfiguriert ist, um die vorcodierte erste Wellenform um eine Hälfte einer Unterträgerfrequenz zu verschieben.

6. Verfahren nach Anspruch 5, wobei die Basisstation (300) ferner konfiguriert ist, um ein Schutzband zwischen der vorcodierten ersten Wellenform und der zweiten Wellenform bereitzustellen.

7. Verfahren nach Anspruch 1-6, wobei die vorcodierte erste Wellenform unter Verwendung eines begrenzten Multicast-Broadcast-Einzelfrequenznetzwerk-, MBSFN-, Bereichs von MBSFN-Unterrahmen gesendet wird.

8. Maschinenlesbarer Speicher, der maschinenlesbare Anweisungen zur Ausführung durch einen oder mehrere Prozessoren eines Evolved Node B, eNB (300), beinhaltet, die bei Ausführung den eNB (300) veranlassen, das Verfahren nach einem der vorhergehenden Ansprüche zu implementieren, wobei der eine oder die mehreren Prozessoren betriebsfähig mit einer Sendeempfängerschaltung des eNB (300) gekoppelt sind.

9. Vorrichtung eines Evolved Node B, eNB (300), zum Reduzieren von Gleichstorm, DC, Interferenz, die Vorrichtung umfassend eine Verarbeitungsschaltung und eine Transceiver-Schaltung, die konfiguriert sind, um das Verfahren nach einem der Ansprüche 1-7 zu implementieren.

## Revendications

1. Un procédé de réduction des interférences par rapport au continu, DC, le procédé comprenant :
au niveau d'une station de base (300) :
le précodage (730), en utilisant une circuiterie de traitement, d'une première forme d'onde qui est désignée pour un premier type d'équipement utilisateur, UE, (200) pour réduire les interférences DC pour le premier type d'UE, dans lequel le premier type d'UE comprend des UE de communication de type machine, MTC, à largeur de bande réduite, configurés pour un signal de largeur de bande de 1,4 MHz, et dans lequel la première forme d'onde est mappée sur une fréquence de sous-porteuse ; et
la transmission (740), via une circuiterie d'émetteur-récepteur, en utilisant un signal de largeur de bande système unique ayant une sous-porteuse DC comme fréquence porteuse à l'intérieur de la largeur de bande système unique, de la première forme d'onde précodée au premier type d'UE et d'une seconde forme d'onde qui est désignée pour un second type d'équipement utilisateur, UE, (200) au second type d'UE, dans lequel :
le second type d'UE comprend des UE de largeur de bande non réduite configurés pour recevoir jusqu'à un signal de largeur de bande de 20 MHz ;
la largeur de bande système unique est de 20 MHz ; et
il n'existe qu'une seule sous-porteuse DC dans la largeur de bande système unique.

2. Le procédé selon la revendication 1, dans lequel la première forme d'onde est précodée en utilisant une technique d'étalement par transformée de Fourier discrète, DFT, et dans lequel la seconde forme d'onde est une forme d'onde à multiplexage par répartition en fréquences orthogonales, OFDM.

3. Le procédé selon les revendications 1 à 2, dans lequel la première forme d'onde est précodée avant que la première forme d'onde ne soit mappée sur une fréquence de sous-porteuse.

4. Le procédé selon les revendications 1 à 2, dans lequel la première forme d'onde est précodée après que la première forme d'onde a été mappée sur une fréquence de sous-porteuse.

5. Le procédé selon les revendications 1 à 4, dans lequel la station de base (300) est en outre configurée pour décaler la première forme d'onde précodée de la moitié d'une fréquence de sous-porteuse.

6. Le procédé selon la revendication 5, dans lequel la station de base (300) est en outre configurée pour prévoir une bande de garde entre la première forme d'onde précodée et la seconde forme d'onde.

7. Le procédé selon les revendications 1 à 6, dans lequel la première forme d'onde précodée est transmise en utilisant une région limitée de réseau à fréquence unique multicast-broadcast, MBSFN, de sous-trames MBSFN.

8. Un dispositif de stockage lisible par machine comportant des instructions lisibles par machine pour exécution par un ou plusieurs processeurs d'un nœud B évolué, eNB, (300) qui, lorsqu'elles sont exécutées, amènent l'eNB (300) à mettre en œuvre le procédé selon l'une des revendications précédentes, les un ou plusieurs processeurs étant couplés en fonctionnement à une circuiterie d'émetteur-récepteur de l'eNB (300).

9. Un appareil d'un nœud B évolué, eNB (300), pour réduire les interférences par rapport au continu, DC, l'appareil comprenant une circuiterie de traitement et une circuiterie d'émetteur-récepteur configurées pour mettre en œuvre le procédé selon l'une des revendications 1 à 7.
